**Europäisches Patentamt**

**European Patent Office**

**Office européen des brevets**

(19)

(11) **EP 1 148 439 A2**

(12) **EUROPÄISCHE PATENTANMELDUNG**

(43) Veröffentlichungstag:
**24.10.2001 Patentblatt 2001/43**

(51) Int Cl.⁷: $G06K\ 11/08$

(21) Anmeldenummer: **01107360.8**

(22) Anmeldetag: **26.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **18.04.2000 DE 10019346**

(71) Anmelder: **Fachhochschule Furtwangen**
**78120 Furtwangen (DE)**

(72) Erfinder:
- **Nachtigall, Christoph, Dr.**
  **77654 Offenburg (DE)**
- **Mescheder, Ulrich, Prof. Dr.**
  **78120 Furtwangen (DE)**

(74) Vertreter: **Pietruk, Claus Peter, Dipl.-Phys.**
**Heinrich-Lilienfein-Weg 5**
**76229 Karlsruhe (DE)**

(54) **Bewegungsgeber**

(57) Die Erfindung betrifft Bewegungsgeber insbesondere für die Cursorsteuerung eines Computers mit einem Körper-Bewegungssensor-Paar zur Ermittlung einer Relativbewegung von Körperoberfläche und Bewegungssensor. Hierbei ist vorgesehen, daß der Körper eine nachleuchtende Oberfläche besitzt, der Bewegungssensor eine Lichtquelle zur Erzeugung eines nachleuchtenden Fleckes auf der Körperoberfläche aufweist, das Körper-Bewegungssensorpaar für eine Relativbewegung von nachleuchtender Oberfläche und Lichtquelle ausgebildet ist und der Bewegungssensor weiter einen positionsempfindlichen Photodetektor umfaßt, der dazu ausgebildet ist, die Position des nachleuchtenden Fleckes zu erfassen.

Fig. 1

**Beschreibung**

Die vorliegende Erfindung betrifft einen Bewegungsgeber nach dem Oberbegriff des unabhängigen Anspruches.

Bewegungsgeber sind per se bekannt. In der Computertechnik werden Bewegungsgeber als Computermäuse, Trackballs und dergleichen zur Cursorsteuerung des Computers verwendet. In einer herkömmlichen Computermaus befindet sich eine drehbar gelagerte und über eine Gehäusefläche partiell überstehende Kugel, die sich dreht, wenn die Gehäusefläche der Maus über eine Fläche bewegt wird. Die Drehung der Kugel wird dann zweiachsig gemessen.

Neben der mechanischen Abtastung durch mitlaufende Walzen wurde hierzu eine Vielzahl von Anordnungen zur Bewegungsdetektion vorgeschlagen. Ein erstes Beispiel ist in der EP 0 729 112 beschrieben, die eine Kugel mit leitfähigen, voneinander isolierten Flächen offenbart, deren Bewegung mit in die Lagerung integrierten Kondensatorplatten ausgelesen wird.

Die US-PS 5,831,553 offenbart eine Anordnung mit einer nichtmagnetischen Kugel, in welche weichmagnetische Teilchen eingelassen sind. Mittels eines Permanentmagneten wird von außen ein Magnetfeld um die Kugel erzeugt. Zwischen Permanentmagnet und Kugel wird dann ein Magnetfeldsensor angeordnet. Die Magnetfeldlinien verlaufen dabei in Abhängigkeit von der Partikelorientierung auf der Kugeloberfläche. Mit einem Sensor zwischen Permanentmagnet und Kugel werden Änderungen des Magnetfeldes und somit Kugeldrehungen erfaßt.

Es ist in der WO 98/36346 vorgeschlagen worden, eine magnetisierbare Kugel mit einem Schreibkopf lokal magnetisch zu markieren, die Markierungsposition nach Drehung mit Leseköpfen zu detektieren und danach mit einem Löschkopf zu löschen.

Weiter ist es aus der GB 2 272 763 bekannt, eine unstrukturierte Kugel mit einem Laser zu beleuchten und das sich unter Kugelbewegung ändernde Laserspeckles-Muster zu erfassen, um aus deren Lageänderung Informationen über die Bewegungsrichtung und die -geschwindigkeit der Kugel zu ermitteln. Die Auswertungsalgorithmen zur Bestimmung von Bewegungsrichtung und Geschwindigkeit sind jedoch kompliziert.

Es ist auch schon vorgeschlagen worden, die Reflektion einer Oberfläche mit reflektierenden Stellen zur Bewegungsdetektion zu erfassen, vergleiche WO 94/22071.

Darüber hinaus wurde vorgeschlagen, in einer Computermaus eine strukturierte Kugel zu verwenden, wobei die Lage der Strukturen optisch, magnetisch, kapazitiv oder galvanisch abgetastet werden können, vergleiche EP 0 416 870.

Im Stand der Technik bestehen Probleme dahingehend, daß die verwendeten Anordnungen, sofern technisch realisierbar, nicht preisgünstig sind, wobei insbesondere die Rechen-Belastung des Rechners durch Auswerteprozesse teuer ist, weil dadurch höhere Rechenleistungen erforderlich sind.

Die Aufgabe der vorliegenden Erfindung besteht darin, Neues für die gewerbliche Anwendung bereitzustellen.

Die Lösung dieser Aufgabe wird unabhängig beansprucht. Bevorzugte Ausführungsformen finden sich in den Unteransprüchen.

Es wird somit zunächst ein Bewegungsgeber insbesondere für die Cursorsteuerung eines Computers mit einem bewegbaren Körper und einem Bewegungssensor zur Erfassung einer Bewegungskörperbewegung vorgeschlagen, bei welchem weiter vorgesehen ist, daß der bewegbare Körper eine nachleuchtende Oberfläche besitzt und der Bewegungssensor eine Lichtquelle zur Erzeugung eines nachleuchtenden Leuchtfleckes auf dem bewegbaren Körper und einen positionsempfindlichen Photodetektor umfaßt, um die Bewegung des nachleuchtenden Fleckes auf der Drehkörperoberfläche nachverfolgen zu können.

Eine Umkehrung des Prinzips ist gleichfalls möglich, so daß eine Lichtquelle relativ zum einem feststehenden, nachleuchtenden Körper bewegt wird und die Leuchtspur auf diesem verfolgt wird.

Ein erster wesentlicher Aspekt der Erfindung besteht somit darin, daß eine Anordnung gewählt wird, bei welcher weder eine komplizierte Strukturierung einer Kugel oder eines anderen bewegbaren Körpers erforderlich ist, noch die Löschung einer Markierung, oder gar eine komplizierte Auswerteeinheit, sondern ein einfaches Ausklingen eines Markierungssignals benutzt wird. Hierzu wird eine nachleuchtende Oberfläche verwendet, wobei auf dieser ein Leuchtfleck auf vorgegebener Stelle erzeugt und dessen Position bei Drehkörperbewegung erfaßt wird. Es wird also eine quasi selbstlöschende Markierung aufgebracht und, soweit möglich, bis zu ihrer Selbstlöschung verfolgt. Während die Erfindung insbesondere für kugelförmige Bewegungskörper nützlich ist, ist eine Verwendung auch mit ebenen Geometrien möglich.

Obwohl es zum Beispiel möglich ist, auch die Unterseite eines Steuerknüppels oder dergleichen mit einer nachleuchtenden Oberfläche als Drehkörper auszubilden, der überdies eine Drehung nur in eine Richtung zulassen muß, wird typischerweise der Drehkörper eine kugelförmige Gestalt aufweisen. Eine andere bevorzugte Anwendung sind Winkelgeber, bei denen eome Achslage erfaßt werden soll.

Besonders vorteilhaft ist es, wenn der Drehkörper einen geringen Durchmesser besitzt. Bevorzugt sind Durchmesser unter 4 mm, besonders bevorzugt nicht mehr als 2 mm. Dies ermöglicht bei herkömmlichen Bewegungsabläufen, wie der typischen Verschiebung einer Maus auf einer Oberfläche, daß sich der nachleuchtende Fleck so weit von der Beleuchtungsstelle entfernt, daß eine hinreichend hohe Auflösung erreicht wird. Wenn die Kugel einen Radius von sogar nur etwa 0,5 mm besitzt, kann ein sehr kompaktes, kugelschreiberähnliches Gerät aufgebaut werden, bei welchem die Kugel stiftähnlich über eine Oberfläche abgerollt wird. Die Kugelgröße erlaubt es dabei, einen Bewegungsgeber in Stiftform mit einer für typische Schreibgeräte üblichen Handhabbarkeit zu verwenden. Dies ist besonders vorteilhaft, wenn eine Datenerfassung derart vorgesehen wird, daß aus der Bewegungsspur einer insbesondere stiftförmigen Maus ein Schriftzug identifiziert wird. Diese Schriftsetzung kann unmittelbar verwendet werden, um die Eingabe ganzer geschriebener Texte mit einem Gerät zu ermöglichen, welches sich wie ein herkömmliches stiftförmiges Schreibgerät bewegen läßt.

In einem bevorzugten Ausführungsbeispiel wird der Bewegungsgeber eine Computermaus, einen Trackball oder einen Mausstift darstellen, d.h. ein Gerät in Stiftform mit einem frontal angeordneten Drehkörper, wobei auf dem Griffkörper selbst Tasten oder dergleichen angeordnet sein können, um einen Mausklick zu signalisieren. In alternativer und/oder ergänzender Weise kann ein Aufdrücken des Mausstiftes auf die Spitze zum Tasten verwendet werden. Es versteht sich, daß zwei Drehgeber an den entgegengesetzten Enden des Mausstiftes vorgesehen sein können, etwa um eine Schreib- und Radierfunktion realisieren zu können, ohne daß dazu ein entsprechender Menüpunkt in einem Computerprogramm aufgerufen werden muß.

Es ist bevorzugt, wenn das Nachleuchten der Oberfläche in längstens 60 Millisekunden, bevorzugt in unter 20 Millisekunden auf eine Intensität von 1/e der Anfangsintensität bei Beleuchtung abklingt. Die Zeit von max. 60 ms ergibt sich dabei aus typischen manuellen Bewegungsabläufen bei der Arbeit mit der erfindungsgemäßen Vorrichtung als vorteilhaft. Eine derart kurze Abklingzeit stellt sicher, daß der (Dreh-)Körper auch und gerade bei rückläufigen Bewegungen keinen Gedächtniseffekt aufweist, sondern nach einer bestimmten Bewegung neu markiert werden kann.

Es ist weiter bevorzugt, wenn die nachleuchtende Oberfläche auf einen Wert von 1/e in kürzestens 1 Millisekunde, bevorzugt jedoch wenigstens 5 Millisekunden abfällt. Darunter liegende Nachleuchtzeiten sind so kurz, daß sich der markierte (Dreh-)Körper bei herkömmlichen Bewegungsgeschwindigkeiten womöglich nicht weit genug von der Beleuchtungsstelle entfernen wird, um die Bewegung messen zu können.

Es ist möglich, die nachleuchtende Oberfläche aus Glas herzustellen, das mit einer Seltene-Erde-Verbindung dotiert ist, wobei beispielsweise erbium-dotiertes Glas zu verwenden ist. Eine Alternative besteht darin, Zinksulfid, insbesondere aktiviertes Zinksulfid, für die nachleuchtende Oberfläche zu verwenden. Es versteht sich, daß es ohne weiteres möglich ist, anstelle eines nur oberflächlich beschichteten (Dreh-)Körpers einen massiv aus nachleuchtendem Material gebildeten (Dreh-)Körper zu verwenden. Dies gilt mit besonderem Vorteil bei kleinen (Dreh-)Körpern, die als zumindest im wesentlichen homogene (Dreh-)Körper leicht herstellbar sind.

Es ist bevorzugt, den positionsempfindlichen Photodetektor durch eine segmentierte Photodiode zu realisieren. Es kann insbesondere eine Vierquadrantendiode verwendet werden, wobei in einer bevorzugten Ausführungsform die Beleuchtung der Kugel von hinten durch eine zentrale Öffnung in der Photodiode erfolgt. Es kann dann durch Bestimmung der relativen Strom-bzw. Signalstärken bei den einzelnen Quadranten erfaßt werden, wie sich der Leuchtfleck und somit der (Dreh-)Körper bewegt.

Weiter ist es bevorzugt, wenn bei Verwendung eines segementierten Photodetektors für die Auswertung Signale von allen Segmenten herangezogen werden können, wozu bevorzugt immer dann eine neue Markierung gesetzt wird, wenn der Leuchtfleck zumindest eines der Segmente nicht mehr beleuchtet. Dies kann, vor allem bei Verwendung einer Vierquadrantendiode bei schneller Bewegung durch Herauslaufen des Leuchtfleckes aus dem Beobachtungsfeld, oder, vor allem bei langsamer Bewegung, durch Abklingen des Leuchtens der Fall sein.

Es ist weiter bevorzugt, der Lichtquelle eine gepulste Stromversorgung zuzuordnen, wobei die Stromversorgung bevorzugt dazu ausgebildet ist, immer dann eine Lichtpuls-Aussendung zu erregen, wenn ein bestimmtes Vielfaches der Nachleuchtzeit verstrichen ist und/oder der Leuchtfleck nicht mehr in gewünschter Weise, zum Beispiel von allen vier Quadranten einer Vierquadrantendiode erfaßt wird, so daß die (Dreh-)Körper-Oberfläche periodisch und/oder im Ansprechen auf eine relative (Dreh-)bewegung und/oder -geschwindigkeit angeleuchtet wird.

Weiter ist es bevorzugt, auf die Drehung des Drehkörpers und evtl. auf Drücken von Tasten bezogene Signale per Funk und/oder über eine Infrarot-Übertragungsstrecke an einen Rechner oder dergl. zu übertragen.

Die Erfindung wird im folgenden nur beispielsweise anhand der Zeichnungen beschrieben. In dieser zeigt:

Fig. 1                einen Bewegungsgeber bemäß vorlie- gender Erfindung;
Fig. 2                ein Detail von Fig. 1;
Fig. 3 bis Fig. 7         weitere Ausführungsformen der Erfin- dung.

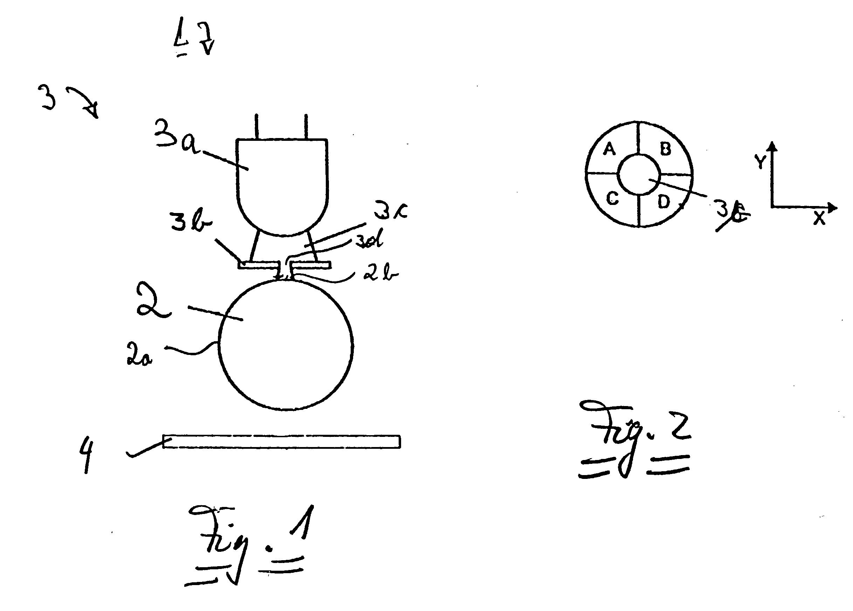

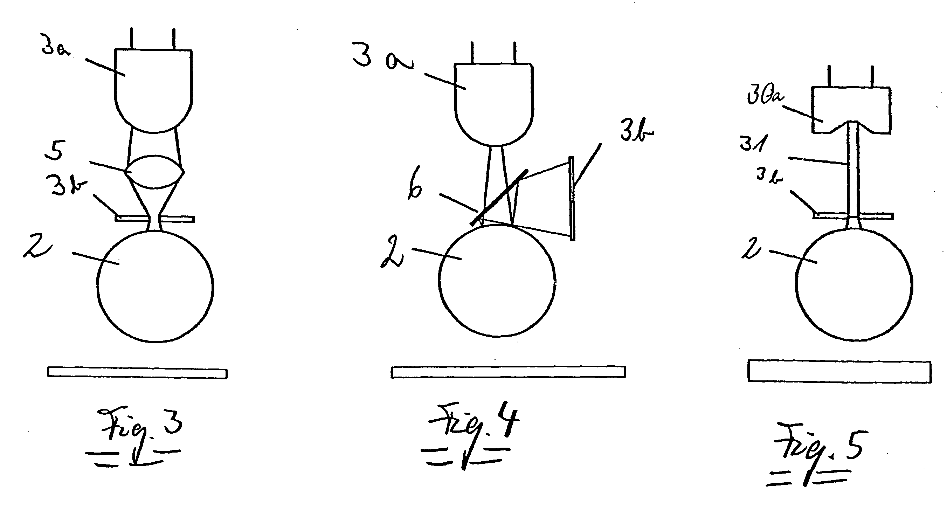

Nach Fig. 1 umfaßt ein allgemein mit 1 bezeichneter Bewegungsgeber 1 einen Drehkörper 2 und einen Drehungssensor 3 mit einer Lichtquelle 3a und einem positionsempfindlichen Photodetektor 3b, der durch eine Vierquadrantendiode mit zentraler Öffnung 3d realisiert ist. Um die zentrale Öffnung herum sind die vier Quadranten angeordnet, die als A, B, C, D bezeichnet werden (Fig. 2).

Der Drehkörper 2 ist durch eine drehbar gelagerte (Lagerung nicht gezeigt) Kugel gebildet, die aus Erbium-dotiertem Glas besteht, so daß sie eine nachleuchtende Oberfläche 2a besitzt. Das Dotierungsmaterial ist so gewählt, daß sich eine 1/e-Abklingzeit von 10 Millisekunden ergibt. Der Photodetektor ist für die Wellenlänge des Nachleuchtelichtes besonders empfindlich, nicht jedoch für die kürzere Wellenlänge der Leuchtdiode.

Die Lichtquelle 3a besteht aus einer gepulst gespeisten (Stromversorgung nicht gezeigt) Leuchtdiode, deren Licht 3c zumindest im wesentlichen von der Rückseite des Photodetektors 3b durch die zentrale Öffnung 3d fällt. Die zentrale Öffnung 3d im Photodetektor 3b ist so bemaßt, daß das durch diese hindurch tretende Licht 3d einen mit dem Photodetektor 3b gut erfaßbaren beleuchteten Fleck 2b auf der Kugel 2 erzeugt.

Weiter ist eine Auswerteschaltung und eine Signalübertragungseinheit zur Übertragung der Auswertesignale (nicht gezeigt) an eine zentrale Rechnereinheit oder dergleichen vorgesehen. Auswerteschaltung und Signalübertragungseinheit werden über eine Batterie mit Energie versorgt, die mit diesen auf kleinstem Raum integriert ist, wie es dem Fachmann per se bekannt ist. Die ganze Anordnung ist in ein stiftartiges Gebilde eingebaut, wobei das Stiftende durch die der Photodektor-LED-Anordnung abgewandte Kugelseite gebildet ist.

Wenn die drehbar gelagerte Kugel 2 über eine Oberfläche 4 bewegt und bei dieser Bewegung mitgenommen wird, kann die Drehung der Kugel wie folgt ermittelt werden:

Zunächst wird die Leuchtdiode 3a kurz erregt, wodurch sich ein hell nachleuchtender Fleck 2b auf der Kugel 2 bildet. Das kurzwellige Erregungslicht wird mit dem positionsempfindlichen Photodetektor nicht erfaßt. Solange die Kugel nicht bewegt wird, liegt dieser leuchtende Fleck zentral unter dem positionsempfindlichen Photodetektor 3b, so daß alle vier Quadranten A, B, C, D gleichmäßig beleuchtet sind und dementsprechend gleiche Signale [A], [B], [C], [D] erzeugen. Die Signale klingen mit dem Nachleuchten ab. Nach hinreichendem Abklingen wird ein weiterer Leuchtfleck erzeugt. Dies setzt sich z.B. alle 10 Millisekunden fort, solange die Kugel sich nicht bewegt.

Wird nun die Kugel bewegt, beispielsweise in Y-Richtung, so nimmt das relative Signal [A], [B] auf den Quadranten A, B zu, während es auf den Quadranten C, D relativ abnimmt. Gleichzeitig nimmt das Gesamtsignal ([A], [B], [C], [D]) durch das Abklingen des Nachleuchtens als solches absolut ab. In entsprechender Weise führt eine Bewegung in positiver X-Richtung zu einem relativen Ansteigen der Stromstärken auf den Segmenten B, D, während die relativen Signale auf den Quadranten A, C abnehmen.

Die Koordinaten, die der Fleck einnimmt, lassen sich, unter Vernachlässigung der durch Kugelkrümmung bedingten Effekte (näherungsweise) berechnen nach

$$X = (([B] + [D]) - ([A] + [C])) / ([A] + [B] + [C] + [D])$$

$$Y = (([A] + [B]) - ([C] + [D])) / ([A] + [B] + [C] + [D]).$$

Die absoluten Koordinaten ergeben sich durch Integration der mit den einzelnen Markierungen erfaßten Wegstrecken.

Sobald sich der Leuchtfleck 2b soweit bewegt hat, daß auf einem der Quadranten kein Signal mehr empfangen wird beziehungsweise das Signal eine bestimmte Stärke unterschreitet, wird eine neue Markierung gesetzt. Dazu wird die Leuchtdiode LED 3a neuerlich erregt, wodurch sich ein neuer Lichtfleck auf der Kugel ausbildet. Es kann dann die Weiterbewegung dieses Fleckes bestimmt werden. Es ist einsichtig, daß bei der beschriebenen Vorgehensweise eine Erregung zeitgesteuert und/oder bewegungsabhängig erfolgt.

Während vorstehend konkrete Formeln für die Koordinatenbestimmung angegeben sind, können auch andere Berechnungswege gewählt werden.

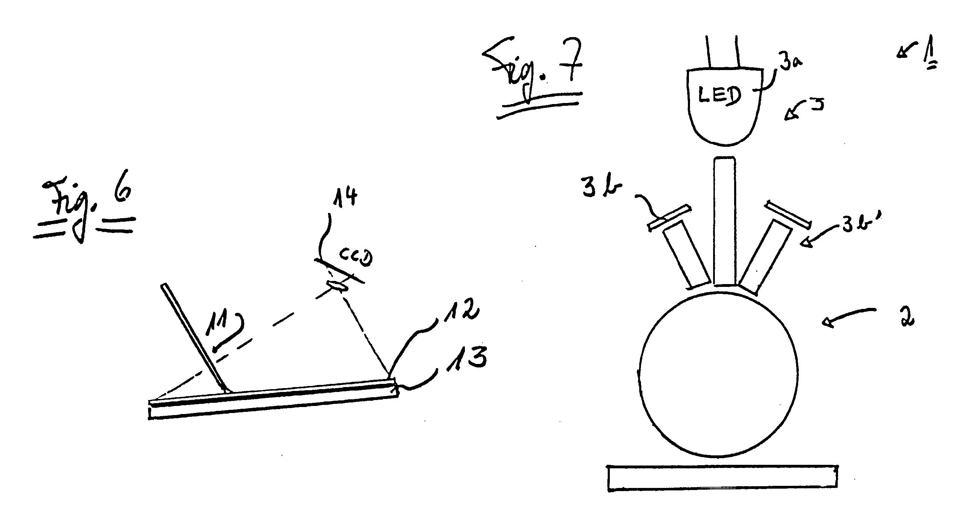

Die Fig. 3, 4 und 5 zeigen alternative Anordnungen für die Beleuchtung. Nach Fig. 3 wird das Licht aus einer LED 3a durch eine Linse 5 gebündelt, wobei der Fokus etwa in der Ebene der Vierquadrantendiode 3b liegt. Auf diese Weise wird die Vierquadrantendiode auch durch rückwärtige Beleuchtung nicht gestört, beispielsweise erwärmt, und es lassen sich hohe Leuchtdichten auf der Kugel 2 erzielen.

In Fig. 4 ist ein Strahlteiler 6 im Strahlengang zwischen der LED 3a und der Kugel 2 vorgesehen. Durch den Strahlteiler 6 tritt das Beleuchtungslicht durch, während das vom Leuchtfleck rückgestrahlte Licht auf den positionsempfindlichen Photodetektor 3b reflektiert wird.

In Fig. 5 ist eine weitere Beleuchtungsanordnung mit einem Laser 30a gezeigt, der durch eine Lichtleiter 31 Licht bis zum positionsempfindlichen Photodetektor 3b strahlt, von wo es auf die Kugel 2 gelangt. Anstelle des Lasers sind einsichtigerweise auch andere Lichtquellen wie LED's verwendbar.

In Fig. 6 ist eine Anordnung gezeigt, bei welcher eine gepulste Lichtquelle 11 verwendet wird, die über eine nachleuchtend ausgestattete Oberfläche 12 eines feststehenden Körpers 13 bewegt wird. Weiter ist eine entfernt angeordnete CCD 14 vorhanden, die die Leuchtoberfläche erfaßt. Mit dieser Anordnung können Zeichenbretter realisiert werden. Durch Schaffung nachleuchtender Maschinenteile, wie nur beispielsweise Stanzmaschinen oder andere Fertigungsmascheinen, kann auch eine Maschinensteuerung nach der Erfindung realisiert werden.

In Fig. 7 ist eine Sensoranordnung gezeigt, bei der der positionsempfindliche Sensor mit vier Lichtleitern 3b' realisiert ist. Die Lichtleiter nehmen das Licht an der Kugel auf und führen es beispielsweise zu vier Photodioden 3b.

**Patentansprüche**

1. Bewegungsgeber insbesondere für die Cursorsteuerung eines Computers mit einem Körper-Bewegungssensor-Paar zur Ermittlung einer Relativbewegung von Körperoberfläche und Bewegungssensor, **dadurch gekennzeichnet, daß** der Körper eine nachleuchtende Oberfläche besitzt, der Bewegungssensor eine Lichtquelle zur Erzeugung eines nachleuchtenden Fleckes auf der Körperoberfläche aufweist, das Körper-Bewegungssensorpaar für eine Relativbewegung von nachleuchtender Oberfläche und Lichtquelle ausgebildet ist und der Bewegungssensor weiter einen positionsempfindlichen Photodetektor umfaßt, der dazu ausgebildet ist, die Position des nachleuchtenden Fleckes zu erfassen.

2. Bewegungsgeber insbesondere für die Cursorsteuerung eines Computers mit einem bewegbaren Körper und einem Bewegungssensor zur Erfassung einer Bewegungskörperdrehung, **dadurch gekennzeichnet, daß** der bewegbare Körper eine nachleuchtende Oberfläche besitzt und der Bewegungssensor eine Lichtquelle zur Erzeugung eines nachleuchtenden Beleuchtungsfleckes auf dem bewegbaren Körper und einen positionsempfindlichen Photodetektor umfaßt, um die Bewegung des nachleuchtenden Fleckes auf der Oberfläche des bewegbaren Körpers nachverfolgen zu können.

3. Bewegungsgeber nach dem vorhergehenden Anspruch, **dadurch gekennzeichnet, daß** der bewegbare Körper ein Drehkörper und der Bewegungssensor ein Drehungssensor zur Erfassung einer Drehkörperdrehung ist.

4. Bewegungsgeber nach dem vorhergehenden Anspruch, **dadurch gekennzeichnet, daß** der Drehkörper eine Kugel ist.

5. Bewegungsgeber nach einem der vorhergehenden Ansprüche, **dadurch gekennzeichnet, daß** der Drehkörper einen Durchmesser von nicht mehr als 4 mm, insbesondere nicht mehr als 2 mm besitzt.

6. Bewegungsgeber nach einem der Ansprüche 2 bis 4, **dadurch gekennzeichnet, daß** der bewegbare Körper einen Durchmesser von nicht mehr als 0,5 mm besitzt.

7. Bewegungsgeber nach einem der vorhergehenden Ansprüche, **dadurch gekennzeichnet, daß** er als Trackball, Computermaus oder Mausstift ausgebildet ist.

8. Bewegungsgeber nach einem der vorhergehenden Ansprüche, **dadurch gekennzeichnet, daß** die nachleuchtende Oberfläche eine 1/e-Abklingzeit von unter 60 Millisekunden, bevorzugt unter 20 Millisekunden besitzt.

9. Bewegungsgeber nach einem der vorhergehenden Ansprüche, **dadurch gekennzeichnet, daß** die nachleuchtende Oberfläche eine 1/e-Abklingkurve von wenigstens 1 Millisekunde, bevorzugt wenigstens 5 Millisekunden Nachleuchtzeit besitzt.

10. Bewegungsgeber nach einem der vorhergehenden Ansprüche, **dadurch gekennzeichnet, daß** die nachleuchtende Oberfläche durch mit Seltene-Erde-dotiertem Glas, insbesondere Erbium dotiertem Glas, gebildet ist.

11. Bewegungsgeber nach einem dem vorhergehenden Ansprüche, **dadurch gekennzeichnet, daß** die nachleuchtende Oberfläche durch aktiviertes Zinksulfid gebildet ist.

12. Bewegungsgeber nach einem dem vorhergehenden Ansprüche, **dadurch gekennzeichnet, daß** der bewegbare Körper massiv aus nachleuchtendem Material gebildet ist.

13. Bewegungsgeber nach einem dem vorhergehenden Ansprüche, **dadurch gekennzeichnet, daß** der positionsempfindliche Photodetektor durch eine segmentierte Photodiode, insbesondere eine Vierquadrantendiode realisiert ist.

14. Bewegungsgeber nach einem dem vorhergehenden Ansprüche, **dadurch gekennzeichnet, daß** die Beleuchtung durch den Photodetektor beziehungsweise eine Öffnung darin hindurch erfolgt.

15. Bewegungsgeber nach einem dem vorhergehenden Ansprüche, **dadurch gekennzeichnet, daß** der Lichtquelle eine gepulste Stromversorgung zugeordnet ist.

16. Bewegungsgeber nach einem dem vorhergehenden Ansprüche, **dadurch gekennzeichnet, daß** die Stromversorgung dazu ausgebildet ist, die Oberfläche periodisch und/oder im Ansprechen auf die Bewegung anzuleuchten.

17. Bewegungsgeber nach einem der vorhergehenden Ansprüche, **dadurch gekennzeichnet, daß** dem positionsempfindlichen Detektor eine Mehrzahl Lichtleiter vorgeordnet ist, die dazu ausgebildet sind, Licht von der nachleuchtenden Oberfläche aufzunehmen und dem positionsempfindlichen Photodetektor zuzuführen.

18. Bewegungsgeber nach einem der vorhergehenden Ansprüche, **dadurch gekennzeichnet, daß** eine Signalübertragung der Auswertesignale per Funk und/oder über Infrarotdioden erfolgt.

Fig. 2

Fig. 1

3a

5

3b

2

Fig. 3

3 a

6

3b

2

Fig. 4

3θa

31

3b

2

Fig. 5

EP 1 148 439 A2

Fig. 7

Fig. 6